# EUROPEAN PATENT APPLICATION

(11) **EP 0 896 907 A1**
(43) Date of publication of application: **17.02.1999**
(21) Application number: 98304425.6
(22) Date of filing: 04.06.1998
(51) Int. Cl.: B60R 19/20

(54) **A bumper**

(30) Priority: 14.08.1997 US 909071; 22.05.1998 US 83126
(71) Applicant: Alshamekh, Faisal Mohammed, Riyadh 11566 (SA)
(72) Inventor: Alshamekh, Faisal Mohammed, Riyadh 11566 (SA)
(74) Representative: Newby, Martin John

(57) **Abstract**

A bumper, e.g. a vehicle bumper, for cushioning impacts comprising a rigid base (5), at least one retaining member (3) detachably secured by securing means (4), such as bolts, to the base (5) and defining with the latter at least one slotted recess (10), a flexible covering (1) having at least one enlarged-section edge portion (2) captively received in the at least one slotted recess (10) to secure the flexible covering (1) to the base (5) and to define with the base (5) a cavity, and an inflatable bladder (6) received within the cavity. The bladder is inflated with air to substantially fill the cavity.

## Description

This invention relates to a bumper and in particular, but not exclusively, to a shock absorbing vehicle bumper for minimizing injuries when a vehicle fitted with the bumper is involved in a collision with humans or animals. Although the invention is primarily applicable to bumpers for motor vehicles, the invention has applications in other vehicles or transport devices, such as bumpers for railway engines or ships, or even as a bumper for protecting structures against impacts, e.g. for protecting the side of a quay against impact from a ship when docking.

Although there are several known ways of designing modern vehicle bumpers, the ability of such known bumpers to absorb shocks in accidents is poor. Furthermore the cost of manufacturing modern vehicle bumpers and maintaining or repairing them when damaged, e.g. as a result of an accident, is high. Examples of known vehicle bumpers are described in US-A-2120459, US-A-2236507, US-A-3971583, US-A-4176858 and US-A-3841683.

US-A-3971583 and US-A-4176858 each disclose a vehicle bumper comprising a rigid metal base and an elastic member, e.g. of rubber or the like, fixed to the metal base. However these known specifications do not adequately address the problem of fixing the elastic member to the metal base.

The present invention seeks to provide an improved bumper, e.g for a vehicle.

According to the present invention there is provided a bumper as claimed in the ensuing claim 1.

A bumper according to the invention provides a secure and practical method of fixing the outer covering to the base. The covering can be easily detached from the base if required for maintenance or repair of the bumper. The edge portions of the outer covering are easily fixed within the slotted recesses with little space to allow rocking of the edge portions within the slotted recesses.

Conveniently the base comprises an elongate base portion and two retaining members, each in the form of an elongate rail, which are detachably secured to the elongate base portion to define two spaced apart and substantially parallel slotted recesses in which two enlarged-section edge portions of the flexible covering are captively received.

The flexible covering suitably comprises a relatively stiff rubber or rubber-like material which is preferably reinforced with reinforcing material, e.g. woven fabric or metallic reinforcing material of the type used to reinforce vehicle tyres.

Conveniently the or each edge portion has an inwardly extending protrusion and/or an outwardly extending protrusion received in the slotted recess. The or each edge portion may have a cross-section of substantially rectangular or sector, e.g. quadrant, shape. In this case, the or each slotted recess may have a cross-sectional shape substantially the same as that of the enlarged-section edge portion received therein. This is particularly important for preventing or minimizing relative movement between the edge portions and the slotted recesses in which the edge portions are received.

The securing means may comprise screw-threaded members, e.g. nuts and bolts.

Embodiments of the invention will now be described, by way of example only, with particular reference to the accompanying drawings, in which:
Figure 1 is a plan of a bumper according to the invention for attachment to a vehicle;
Figure 2 is a view from the front of the bumper shown in Figure 1;
Figure 3 is a sectional view of the bumper shown in Figure 1;
Figure 4 is a sectional view of a flexible covering of the bumper shown in Figure 1;
Figures 5 to 8 are partial perspective views of component parts of the bumper shown in Figure 1; and
Figures 9 to 11 are sectional views illustrating three different embodiments of a bumper according to the invention.

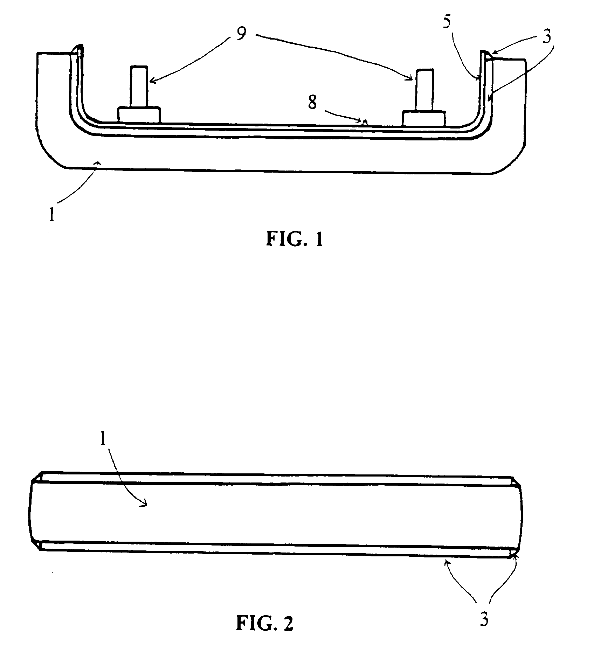

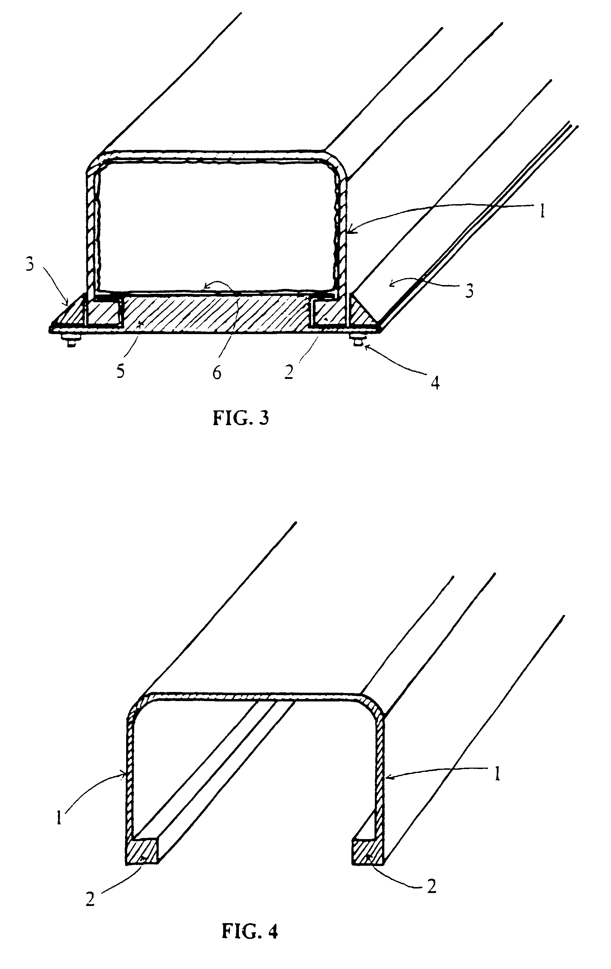

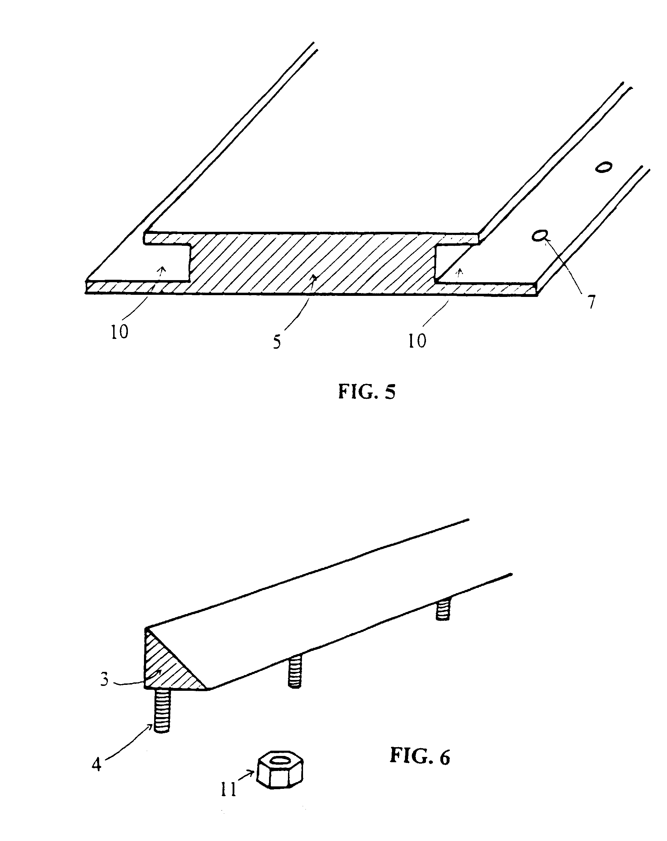

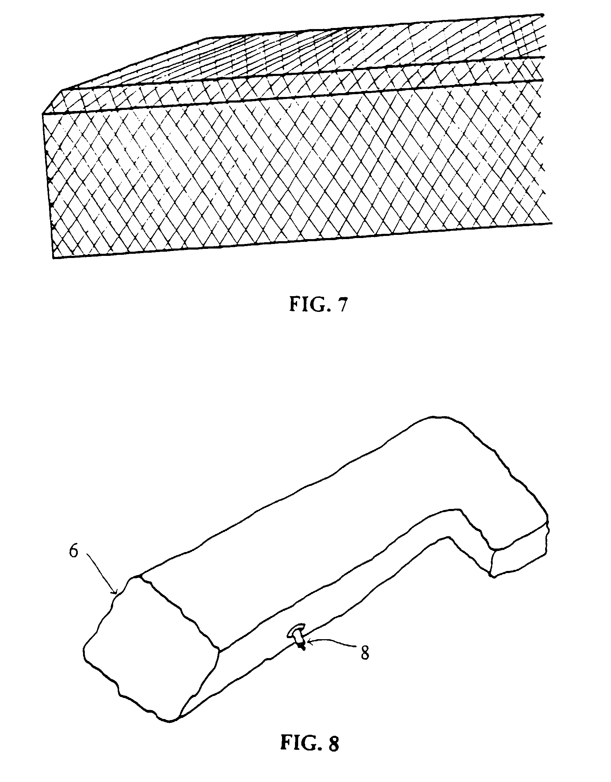

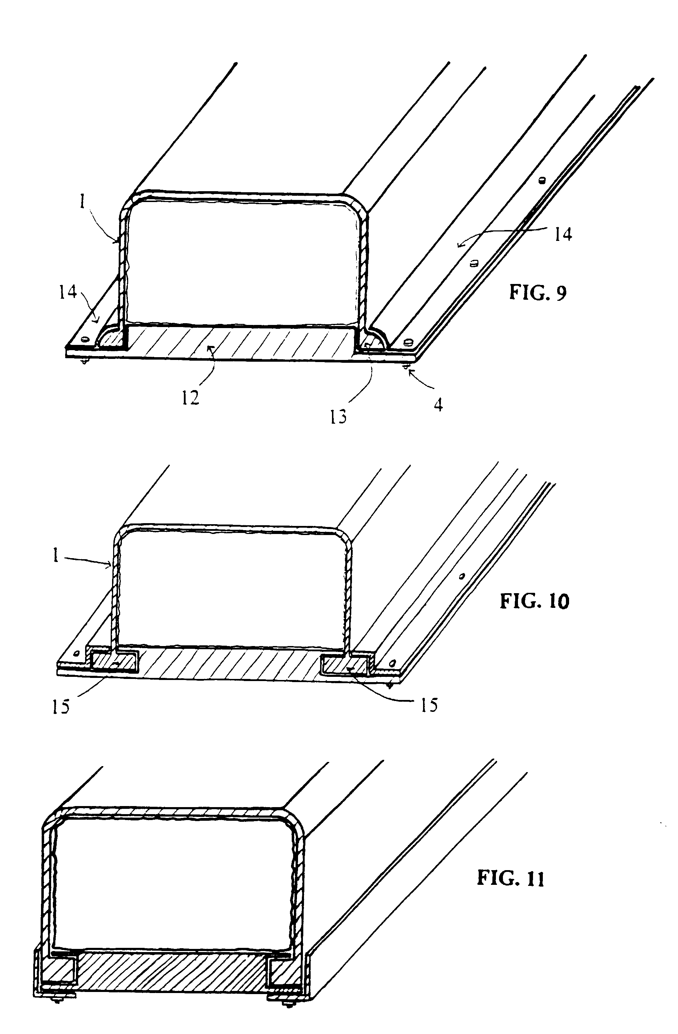

Figures 1 to 8 and 11 show one embodiment of a vehicle bumper having an elongate outer covering 1 of generally channel section and made of a stiff yet flexible material such as, for example, heavy duty rubber or rubber-like material of the kind used in vehicle tyres. Such elastic material may be reinforced with wire or fabric material and Figure 7 illustrates schematically a net-like reinforcement of the covering 1 for giving the covering a greater tolerance. The outer covering 1 may be coloured as desired and its longitudinal edges are enlarged to provide inwardly extending protrusions 2. These protrusions may have a rectangular or square section (as shown in Figures 3, 4, 10 and 11), a triangular section, a sector shaped section (as shown in Figure 9) or any other suitable section.

The outer covering is detachably secured to a base 5, preferably a rigid base, made of any suitable material, e.g. metallic material or a plastics material possibly reinforced with fabric material or the like. The base 5 has an elongate central portion and turned end portions as illustrated in Figure 1. Detachably fixed to the base 5 are retaining members in the form of rigid side rails 3. The side rails 3 define with the base 5 elongate slotted recesses in which the protrusions 2 are received. Preferably these slotted recesses have substantially the same cross-sectional shape as that of the protrusions 2 received therein. In the embodiment shown in Figures 1-8 and 11, the base 5 has elongate recesses 10 which are partly closed by the rails 2 when the latter are secured to the base. In the embodiment shown, the rails 2 are provided with screw-threaded bolts 4 positioned approximately 18 cm apart (although different spacings can be used for differently sized bumpers). These bolts 4 are received in correspondingly spaced apart holes in the base 5 and have nuts 11 secured thereto.

The outer covering 1 when secured by the rails 2 to the rigid base 5 defines a cavity in which an inflatable bladder 6 (see Figure 8) is received. The bladder has a valve 8 positioned in a hole in the base 5 (see Figure 1). The bladder is inflated to fill the cavity.

The bumper is assembled by positioning the bladder inside the channel-section outer covering 1 and then positioning the protrusions 2 in the recesses 10 of the base 5. The rails 2 are then screwed down in position on the base to detachably secure the outer covering 1 to the base 5. The bladder 6 is then inflated through the valve 8 to the appropriate pressure for the vehicle concerned. The bumper is fixed in position on the vehicle by means of fixing posts 9 (see Figure 1).

Alternative designs for the edges 2 of the outer covering 1 are shown in Figures 9 and 10. In Figure 9, outwardly extending sector-shaped protrusions 13 are provided. The base is not recessed, but cooperates with curved portions 14 of the rails to provide suitably shaped slotted recesses to captively receive the protrusions 13. In Figure 10, the protrusions at the edges of the outer covering 1 extend inwardly and outwardly. The slotted recesses in which these protrusions are received are defined by the cooperating base and rails secured thereto.

The manner in which the bumper is formed allows bumpers according to the invention to be manufactured to virtually any shape or size for fitting to differently sized vehicles. The bumper has a great ability to absorb shocks when impacted during an accident. A bumper according to the invention can be used in other fields requiring shock absorbance. It could, for example, be mounted at the front of trains - in which case it would be of generally larger size than for motor vehicle applications and the bladder would be inflated to higher pressures. A bumper according to the invention could also be mounted on a tanker or other ship, especially those carrying dangerous cargoes and whose sinking would cause pollution of the sea. Although in most practical applications, especially vehicle applications, the bumper will at least include an elongate portion, the invention is intended to cover other shapes of bumper. For example, a circular bumper "pad" could be envisaged for attachment to a fixed structure to protect the structure or anything striking the structure. For example, the side of a quay could be provided with an elongate or other shaped, such as circular, bumper.

A bumper according to the invention can be manufactured relatively cheaply and can also be repaired relatively easily. The invention is able to reduce the damage caused in accidents, minimizing physical damage and pollution caused in such accidents.

## Claims

1. A bumper, e.g. a vehicle bumper, for cushioning impacts comprising a base (5), preferably a rigid base, at least one retaining member (3) detachably secured by securing means (4) to the base (5) and defining with the latter at least one slotted recess (10), a flexible covering (1) having at least one enlarged-section edge portion (2) captively received in said at least one slotted recess (10) to secure the flexible covering (1) to the base (5) and to define with the base (5) a cavity, and an inflatable bladder (6) received within said cavity.

2. A bumper according to claim 1, characterised in that the base (5) comprises an elongate base portion and in that two retaining members, each in the form of an elongate rail, are detachably secured to the elongate base portion to define two spaced apart and substantially parallel slotted recesses (10) in which two enlarged-section edge portions (2) of the flexible covering (1) are captively received.

3. A bumper according to claim 1 or 2, characterised in that the flexible covering (1) comprises a rubber or rubber-like material.

4. A bumper according to claim 3, characterised in that the rubber or rubber-like material is reinforced with reinforcing material, e.g. woven fabric or metallic reinforcing material.

5. A bumper according to any one of the preceding claims, characterised in that the or each of the said edge portions (2) has an inwardly extending protrusion (2) and/or an outwardly extending protrusion (13, 15).

6. A bumper according to any one of the preceding claims, characterised in that the or each of the said edge portions (2) has a cross-section of substantially rectangular or sector, e.g. quadrant, shape.

7. A bumper according to any one of the preceding claims, characterised in that the or each slotted recess (10) has a cross-sectional shape substantially the same as that of the enlarged-section edge portion (2) received therein.

8. A bumper according to any one of the preceding claims, characterised in that the securing means (4) comprises screw-threaded members, e.g. nuts and bolts.

9. A bumper according to any one of the preceding claims, characterised in that the bladder (6) is fitted with valve means (8).

10. A bumper, e.g. for a vehicle or the like, comprising an outer frame, optionally reinforced, e.g. with fabric or wires, having edges which protrude inwardly and/or outwardly, a base, side rails detachably secured to the base and defining therewith slotted recesses in which said protruding edges are captively received and bladder means inflatable to at least substantially fill a cavity defined between the outer frame and the base.
